Europäisches Patentamt

European Patent Office

Office européen des brevets

(19)

(11) Publication number: **0 085 282**
**A1**

# (12) EUROPEAN PATENT APPLICATION

(21) Application number: 82830268.7

(22) Date of filing: 25.10.82

(51) Int. Cl.³: **G 05 B 19/04**

(30) Priority: 30.10.81 IT 2478981

(43) Date of publication of application:
10.08.83 Bulletin 83/32

(84) Designated Contracting States:
CH DE FR GB LI NL

(71) Applicant: Bellini, Mario
Via Enrico Fermi 38
I-25060 Mompiano (Brescia)(IT)

(72) Inventor: Bellini, Mario
Via Enrico Fermi 38
I-25060 Mompiano (Brescia)(IT)

(74) Representative: Calvani, Domenico
UFFICIO BREVETTI ING. CALVANI, SALVI & VERONELLI
4, Piazza Duca d'Aosta
I-20124 Milan(IT)

(54) **Printed circuit card with memory programmable logic.**

(57) This invention relates to a printed circuit card with a memory programmable logic, which finds particular application in the control of automatic devices having small /middle complexity and input/output number. It comprised as a basic decoding and programmming element an electrically programmable, read only memory (EPROM), preferably of the type having 12 inputs and 8 outputs, which is programmed in accordance with logic functions translated from the Boolean algebra, and which interfaces input terminals ON-OFF control elements and output terminals connected to the devices, by using binary weighted code outputs which will apply the control voltage to said devices in accordance with the memorized instructions. This card also input filters, timers for the various output functions and amplifiers for the output voltage of the card.

EP 0 085 282 A1

./...

Fig. 8

"PRINTED CIRCUIT CARD WITH MEMORY PROGRAMMABLE LOGIC,

PARTICULARLY FOR CONTROLLING AUTOMATIC DEVICES HAVING

SMALL/MIDDLE COMPLEXITY AND INPUT/OUTPUT NUMBERS".


Mr.Mario Bellini, an Italian Citizen residing

in MOMPIANO (Brescia) - Italy.

TITLE MODIFIED
see front page

This invention generally relates to programmable logic systems and more particularly to a printed circuit card with memory programmable logic of a new design, which finds particular application in controlling automatic devices generally, by using as a memory element a read only memory.

It is well known that the read only memories are intended to keep registered therein instruction or elemental order sequences which meet more or less complex functions.

Each time one of these functions is to be performed, the control element reads the order sequences and carries out them. Of course, these memories can only be interrogated since their contents, in order to give a well definite permanent reading, have been registered directly by the manufacturer. There are also read only memories w-hich, once they are removed from the devices in which they are operative, can be modified by the user, by erasing the informations contained therein and entering other informations which will remain permanent all the time that the memory is connected to the used device (so called EPROM or Electrically Programmable Read Only Memory).

It is the object of the present invention to provide a printed circuit card using a programmable memory of the above-mentioned type for controlling in accordance with the
informations contained therein, automatic devices or equip-
ment having small/middle complexity and input/output number,
this card being provided with electronic elements for obtaining, as a card output, the information contained in the me-
mory and translated from the Boolean algebra, so as to be
able to accomplish the requested function.

More particularly, the printed circuit card according
to this invention is characterized in that it comprises as
a basic decoding and programming element, a read only memory,
which is programmed according to logic functions translated
from the Boolean algebra and which interfaces input terminals
to be connected to ON-OFF control elements and output terminals
to be connected to the devices under control by using binary weiht-
ed code outputs providing the control voltage to said devices
in accordance with the instructions contained in the memory,
said card including also input filters, timers for the various
output functions and amplifiers for the output voltage of the
card.

Advantageously, the read only memory is an EPROM memo-
ry having 12 inputs and 8 outputs and each input thereof is
split in two by means of diodes in order to permit two contacts
to be paralleled without using additional memory capacities,
thereby giving the theoretical possibility of administrating
24 input signals.

According to a feature of this invention the card
includes additional locking and enabling terminals intended
to stop the operation of the device under control in the case
or necessity and then to restart it.

Preferably, the timers are of the RC-type with potentio-
meters for calibrating the delay time of energization, deenergization and/or of both the energization and deenergization.

The invention will be described now in greater detail in connection with a preferred embodiment thereof, given by way of example only and therefore not intended in limiting sense, and shown in the accompanying drawings, wherein:

Figs.1 to 5 show illustrative diagrams given in order to facilitate the understanding of the invention.

Fig.6 is an illustrative circuit diagram of loads which can be swhitched on or off by the card output;

Fig.7 shows an electromechanical diagram of an embodiment with the corresponding memory equivalent, and the used output in terms of Boolean algebra;

Fig.8 shows a card according to the present invention, with a possible circuit arrangement.

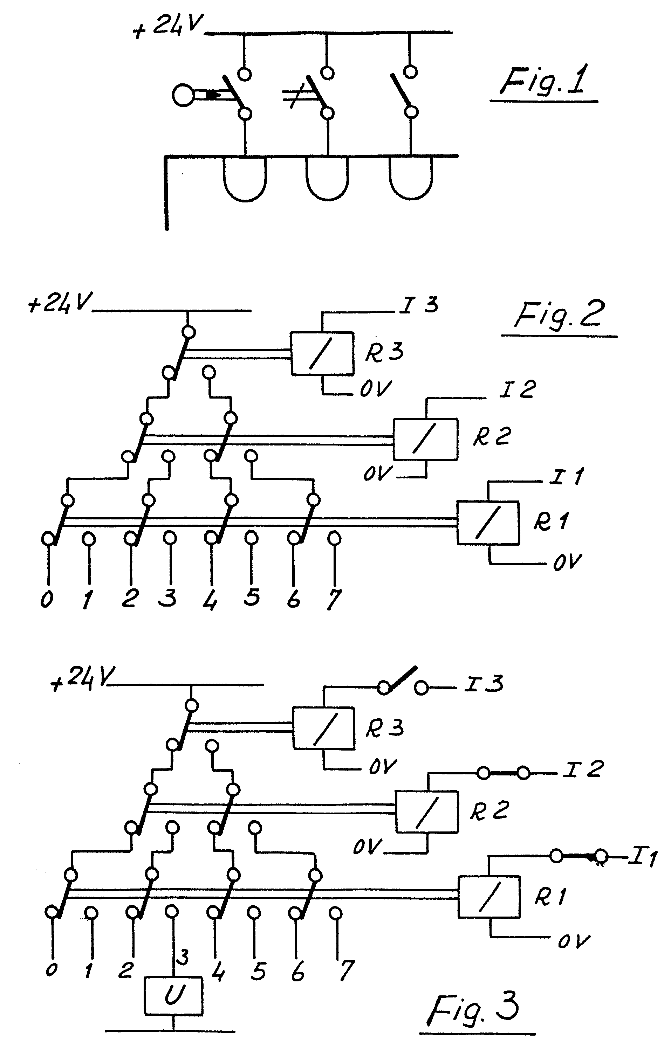

Referring now to the drawings and particularly to Figs 1 to 5, a detailed description of the operating principles of the invention will be given.

In the programmable logic of this invention, each of the signals is applied directly to the card input (active at 24 Volts of d.c. current) and the desired series-parallel operations are performed through the programming of a suitable memory. In order to better understand the operating and programming principle it is useful to refer first to the electromechanical circuit of Figs 1, 2 and 3.

As can be noted by comparing Figs.2 and 3 each single relay has a different weight in the determination of the number on which the 24 Volt voltage will be available. The relay R1, (Fig.2) when energized (Fig.3), shifts the output to the right hand by one unit; the relay R2 by two units and finally, if the relay R3 only should be energized, the output on the contact 4 would be energized (Fig.2). If the energization of an output with the simultaneous energization of the relays R1 and R2 is to be obtained, the voltage must be taken at the output contact 3 (Fig.3).

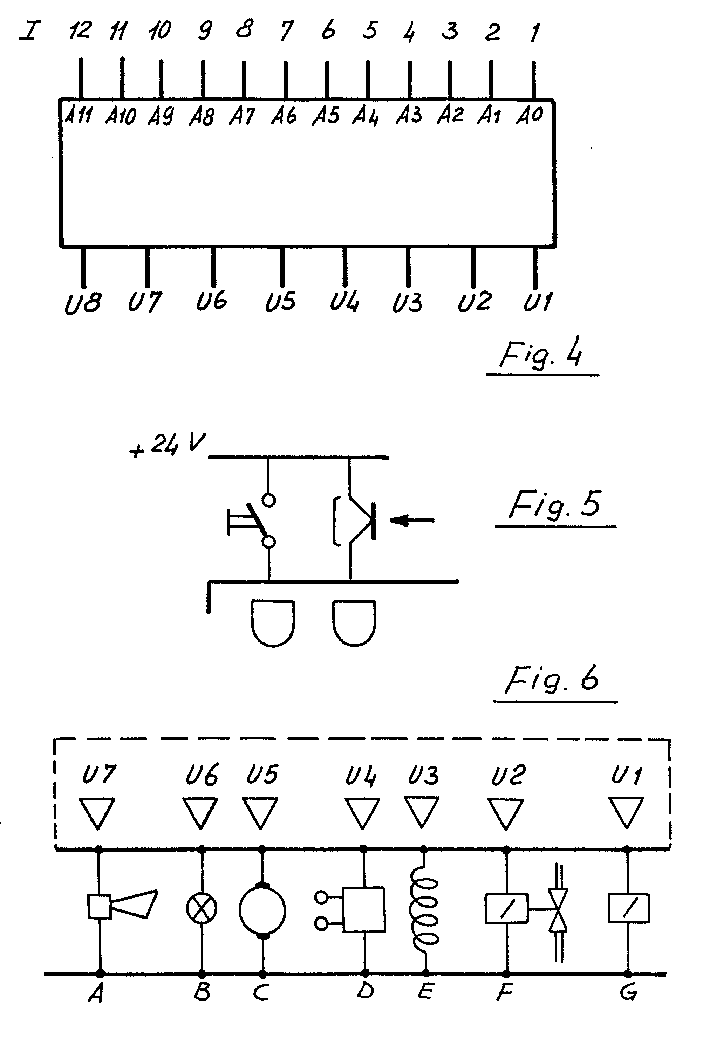

In fact only the simultaneous energization of the relays R1 and R2 according to the Fig.3 activates this output contact 3. If one of the relays R1 and R2 or also if the relay R3 are actuated, there will be different positions of the contacts. It can be said in this case that the output "U" is energized by the set (ideal) of contacts I1 and I2. The weight of each single relay in determining the output member follows the binary numeration, i.e. the first is 1, the second is 2, the third is 4 and, if other relays are present, the sequence would be 8, 16, 32,64, 128, and so on. Their contacts are configured so as to perform practically a binary decoding, thereby making it possible to have an output for every logic combination. Therefore the selection of the output (s)constitutes the programming operation. The programmable logic according to the invention uses an electronic memory of the EPROM type (Electrically Programmable Read Only Memory), as a basic decoding and programming element. This memory has 12 input pins I1 - I12 (addressing)which correspond to 4096 different memory locations, that is all the possible combination of the 12 input pins, corresponding to $2^{12}$ (i.e.4096), are possible (Fig.4).

The used memory is of the type 2732 corresponding to 32768 memory cells. It has 8 outputs U1-U8, each of which is programmable 4096 times. If to the addressed pins A0-A11 of the memory inputs from limit swhitches (F) push-buttons (P)

- 4 -

or the like, will be connected, each of them will carry a binary weight which, according to its condition (open or closed) will concur to the address formation. Assuming that the pin 1 (I1) is connected to the address AU and so on, there will result

$$I1 = 2^0 = 1 = A0$$
$$I2 = 2^1 = 2 = A1$$
$$I3 = 2^2 = 4 = A2$$
$$I4 = 2^3 = 8 = A3$$
$$I5 = 2^4 = 16 = A4$$
$$I6 = 2^5 = 32 = A5$$

$$\ldots\ldots\ldots\ldots\ldots$$

$$I12 = 2^{11} = 2048 = A11$$

This means that, if for example the input I12 only is active (presence of voltage at the address A11) the memory would be energized at the location 2048. If I12 and I2 were simultaneously active, the location 2048 + 2 = 2050 would be active.

As a result of this, a memory having a capacity of 4096 locations assures a _univocal_ response for any combination of 12 inputs I1-I12. By suitably programming the memory so that the outputs thereof will correspond to predetermined input combinations only, the programmable logic of the invention will be obtained. The programmer should be able to program the EPROM by translating the electromechanical diagram in the desired memory locations.

A practical translation example could be the following: if it is desired to control the output U1 by means of the set of inputs I1 and I2 the memory should be programmed as

- 5 -

follows:

| Address | A4 | A3 | A2 | A1 | A0 | U1 |
|---------|----|----|----|----|----|----|
| 0 | 0 | 0 | 0 | 0 | 0 | 0 |
| 1 | 0 | 0 | 0 | 0 | 1 | 0 |
| 2 | 0 | 0 | 0 | 1. | 0 | 0 |
| 3 | 0 | 0 | 0 | 1 | 1 | 1 |
| 4 | 0 | 0 | 1 | 0 | 0 | 0 |
| 5 | 0 | 0 | 1 | 0 | 1 | 0 |
| 6 | 0 | 0 | 1 | 1 | 0 | 0 |
| 7 | 0 | 0 | 1 | 1 | 1 | 1 |
| 8 | 0 | 1 | 0 | 0 | 0 | 0 |

That is, each time the condition occurs in which the address A0 (I1) and A1 (I2) are active the output must be active. To this recurrence it is automatically provided by starting from the formula written in Boolean algebra:

$$U1 = I1 \times I2$$

where x indicates a set of contacts.

The programmer relies upon the Boolean algebra applied to the card according to this invention.

The object of the invention is a printed circuit card with metallized holes including:

a) input filters

b) memory

c) timers

d) output amplifiers.

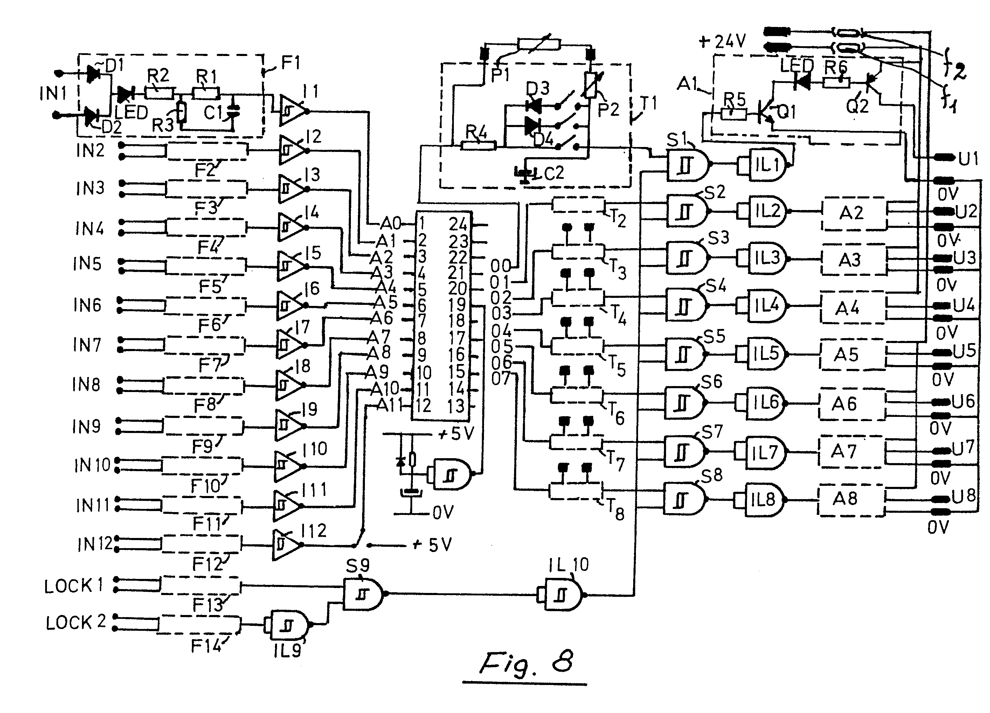

(For the following description see also Fig.8).

INPUT FILTERS

An electromechanical contact which is closing generates during a few milliseconds several pulses due to the contact rebouncing. The input filters are provided for presenting "clean" signals to the address pins of the memory. This is accomplished by slowing down and squaring the signals. Furthermore, the filters transfer the voltage level of the external circuits (usually 24 volt of direct current) to the voltage level of the internal circuits (usually 5 Volt d.c. current). The input is considered as active from 15 volts d.c. current and is protected up to 100 Volts d.c. current. Each input is split in two inputs by means of diodes in order to permit two contacts to be paralleled without using additional memory capacities. Thus, there is the theoretical capacity of administrating 24 signals which, together with the lock and enable signals, will bring the input number to 28. Each input is made visible by means of a green LED and has a protection against the polarity-reversal. An example of input connections is shown in Fig.5.

MEMORY

The memory herein used is the commercially available memory 2732 which has a capacity of 4069 locations for 8 outputs. This memory is programmed in a separate system and then inserted in the appropriate socket. It can be erased by means of a UV-rays lamp located 2 cm over the transparent window of the memory 2732 for about 20 minutes and then reused several times. Of course, this memory contains the entered informations also for failure of the feed voltage.

TIMERS

Between the memory outputs and the power amplificator a precision timing is inserted, which can be programmed by means of microswitches provided for this purpose.

The available possibilities are:

| FUNCTIONS | CONTACTS (Fig.8) |
| --- | --- |
| | 1 2 3 |
| no timing | C A A |
| energization delay | A A C |
| deenergization delay | A C A |
| energization and deenergization delay | A A M |

where A = open   and   C = closed

The delay time is depending on the values of the capacitors and the measuring potentiometers employed. Generally values of 47 $\mu$f and 2 M are employed, which will correspond to a timing of 10 seconds. Different delay times can be obtained by connecting to the appropriate terminals suitable potentiometers (20 M = 100 seconds). In this case the internal and external potentiometers are series-connected and this can permit a coarse and fine adjustment. At any rate, when timings are made (contact 1 open) something must be always connected to the external potentiometers terminals ( short-circuit if the internal potentiometes are used) since otherwise an infinite time would be obtained).

OUTPUT AMPLIFIERS

The output amplifiers perform a voltage level transfer from 5 Volts to 24 Volts and comprise output PNP -transistors. The direct current which can be switched in a continuous operation is of $1A-2A_{max}$. A protection against the inductive

- 8 -

load switching is provided, which comprised a diode and a resistor. The active output is 24 Volt d.c. The loads are connected of the zero Volt line (OV) so that they can be fed back at the input as any other signal. (This permit, for example, a memorization). If desired, components having protection against short-circuits and overheating can be provided.

The outputs are made visible by means of red LEDs inserted in the output amplifying stages from 5 to 24 Volts series connected to two transistors forming the power amplifiers.

In Fig.6 there is shown an example of loads which can be switched by means of the card according to the invention.

For example, to the output U1 a relay G, to the out-put U2 a magnetic valve F, to the output U3 an electromagnet E, to the output U4 an alternating current static switch D, to the output U5 a direct current motor C for servo mechanisms, to the output U6 a signalling lamp B and to the output U7 an electronic siren A can be applied.

Of course, these loads have been indicated merely by way of example, in order to point out the versability of the card according to the invention.

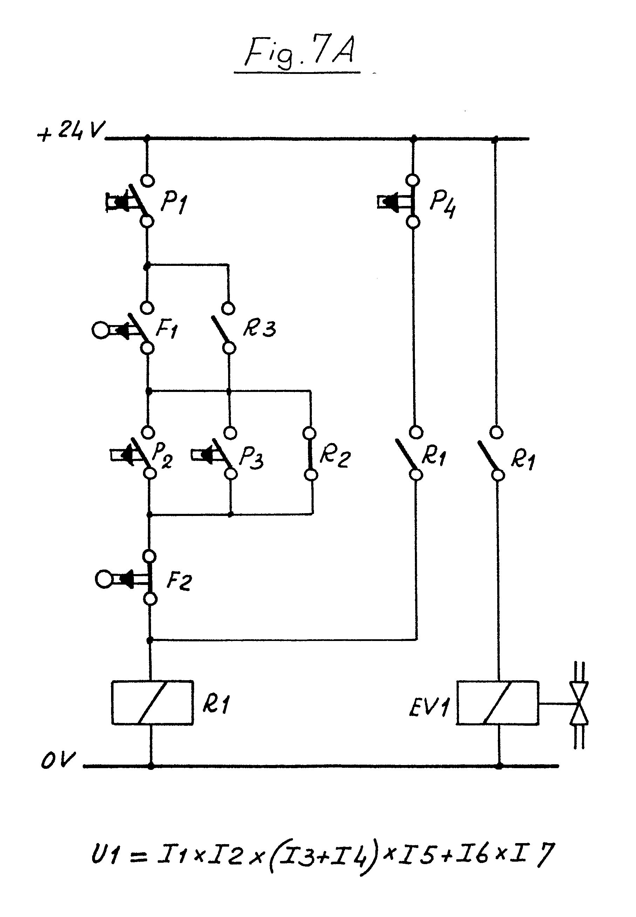

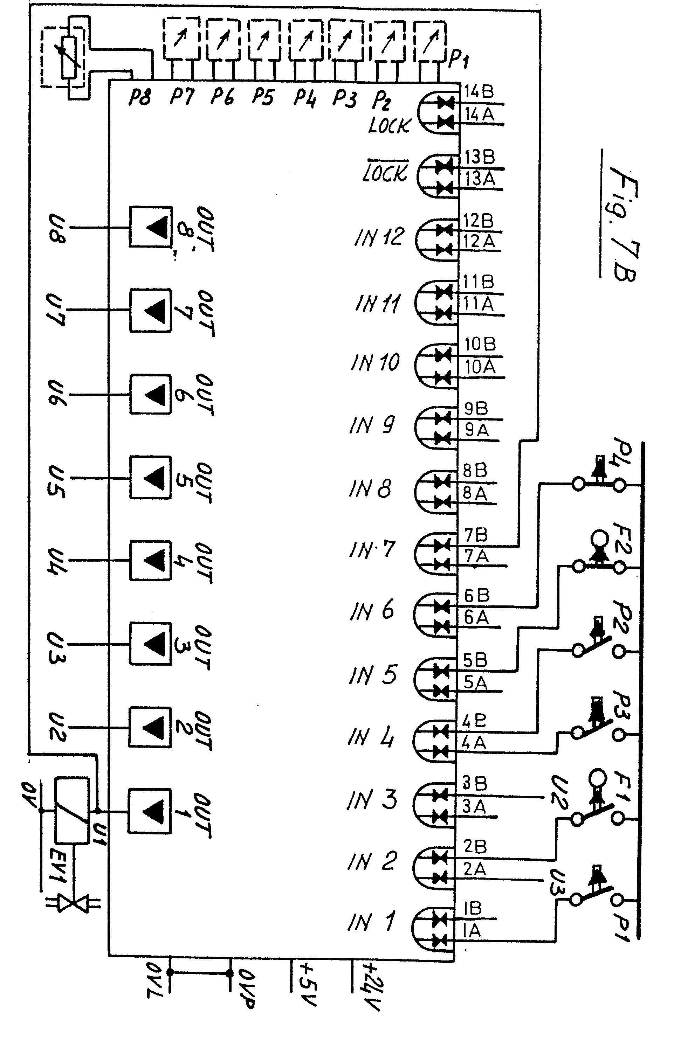

Another example is shown in Fig.7, where on the left hand the electromechanical diagram for controlling an electromagnetic valve $EV_1$, whereas on the right hand the corresponding equivalent applied to the EPROM with the relevant Boolean formula are illustrated. In this figure P1, P2 and P3 are push-buttons, F1 and F2 are limit switches, R1, R2 and R3 are relays.

As can be seen from the translation, the inputs
are all cpnnected to the 24 Volt line and, where possible,
the paralleling has been made by using the splitting in
two inputs by diodes provided for each input. The self-
holding of R1 is easily obtained by feeding back to a
free input the output of concern (for esample the output
U1 is fed back to the input 7B).

Fig.8 shown the card according to the invention
provided with the EPROM 2732 and with a possible circuit
arrangement for controlling the devices under control.

As can be seen from this Figure, the card has
12 inputs terminals IN 1 to IN 12 plus two look inputs
terminals "LOCK 1" and "LOCK 2" and two enabling inputs
terminals. As already said, to these terminals ON-OFF
elements are connected, for example limit swhitches,
push-buttons and so on for the programmable control of
the devices.

To these input terminals IN 1 to IN 12, as well
as to the lock terminals input filters F1 to F14 are
connected, of which the filter F1 is shown in detail
and the other filters are indicated in dashed lines
only since they are similar to the first one. The fiiter
F1  includes a RC-filter formed of a capacitor C1 and a
resistor R1 and a voltage dividor R2, R3 with a LED-diode.
Each input is split in two inputs by means of diodes D1, D2
in order to permit the paralleling of two contacts. The
outlet of each of the filters F1-F12 is connected to a
logic inverter I1-I12 of the Schmitt-trigger type, which
squares the input signal and bring it to the voltage
level of the internal circuits (5 Volts) to the inputs

- 10 -

AO to A11 of the EPROM memory. The eight output OO-O7 of the memory are connected to timers T1-T8, of which only the timer T1 is shown in detail, while the other timers are illustrated by dashed lines since they are similar to the first one. The timer T1 comprises a resistor R4 series-connected to three parallel connected microswitches 1, 2, 3 and to a capacitor C2. The microswitches 2 and 3 have a diode D4 and D3 respectively series connected to each other and arranged with reverse conduction directions. An internal calibrating potentiometer p1 is parallel connected to the microswhitches 1,2,3 and an external potentiometer P1 is provided which is connected to appropriate terminals.

These timers will determine the delay time which is depending on the capacity values of the capacitors C2 and the calibrating potentiometers p1-p8, which values can be changed by the external potentiometers P1-P8 series-connected to the internal potentiometers p1-p8 so as to permit a coarse and fine adjustment. The function of timing has been already described in connection to the section relating to the timers.

The timer outputs are connected to the input of a set of Schmitt-triggers S1-S8, the other inputs of which are parallel connected to the filters F13 and F14 through a circuit including a logic inverter IL9 the output of which is connected to a Schmitt-trigger S9 the other input of which is connected to the output of the lock filter F13 and the output of which is connected to a logic inverter IL 10 the output of which is connected to the above mentioned inputs of the Schmitt-triggers S1-S8.

Each output of the Schmitt-triggers S1-S8 is connected to a corresponding logic inverter IL1 - IL8, each output of which is connected to an amplifier A1 - A8, of which only the amplifier A1 is shown in detail, since the other amplifiers are similar thereto. The amplifier A1 has a NPN-transistor Q1, the base of which is connected to the output of the corresponding inverter through a resistor R5 and the emitter of which is connected to the output terminals OV (zero Volt), which are all parallel connected to each other, whereas the collector of the transistor Q1 is series connected through a LED-diode and a resistor R6 to the base of an output PNP-transistor Q2, the collector of which is connected to the output terminals U1-U8 of the devices under control and the emitter of which is connected to a feed terminal of 24 Volts of direct current through the fuses f1 and f2.

From the foregoing it can be easily noted that a printed circuit card has been provided, which is based on a programmable logic of new design and very reliable. The construction and the high noise immunity of this card make it particularly suitable in all the industrial environments which are adverse to other electronic logics. Since this card is fully static in nature and the switching times can be changed, it cannot be damaged by any electrical noise. Another advantage is the simplicity of programming (Boolean algebra).

While the invention has been shown and described in connection to an embodiment only, it is apparent that those skilled in the art can make thereto various changes and modifications without departing from the scope of the invention.

In particular the memory is not limited to the EPROM type, but all types of electronic memories can be employed such as programmable read only memory (PROM), rea-d only memory (ROM), electrically erasable programmable read only memory (EEPROM). Also the circuit components are not intended in limiting sense, because all the equivalents within the scope of the invention can be used.

C L A I M S

1. A printed circuit card with memory programmable logic, particularly for controlling automatic devices having small/middle complexity and input/output number, characterized in that it comprises as a basic decoding and programming element a read only memory, which is programmed according to logic functions translated from the Boolean algebra and which interfaces input terminals to be connected to ON-OFF control elements and output terminals to be connected to the devices under control using binary weighted code outputs providing the control voltage to said devices in accordance with the instructions contained in the memory, said card including also input filters, timers for the various output functions and amplifiers for the output voltage of the card.

2. A printed circuit card as claimed in claim 1, wherein said read only memory is an electrically programmable read only memory (EPROM).

3. A printed circuit card as claimed in claim 1, wherein said read only memory can be a programmable read only memory (PROM) or an electrically erasable programmable read only memory (EEPROM).

4. A printed circuit card as claimed in claim 1, wherein said read only memory has 12 inputs and 8 outputs.

5. A printed circuit card as claimed in claim 1, wherein said read only memory has each input which is split in two inputs by means of diodes in order to permit two contacts to

- 1 -

be paralleled without using additional memory capacities, thereby giving the possibility of administrating 24 input signals.

6. A printed circuit card as claimed in claim 1, wherein additional lock and enable terminals intended to stop the device under control in the case of necessity and to restart it are provided.

7. A printed circuit card as claimed in class 1, wherein said timers are of the RC-type with potentiometers calibrating the delay time of energization, deenergization and/or of both the energization and deenergization.

Fig.1

Fig.2

Fig.3

0085282

Fig. 4

Fig. 5

Fig. 6

## Fig.7A

$$U1 = I1 \times I2 \times (I3 + I4) \times I5 + I6 \times I7$$

*Fig. 7B*

_Fig. 8_

0085282

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| | --- | | G 05 B 19/04 |
| P,X | FR-A-2 502 357 (MATSUSHITA) *Figures 2,5; page 11, line 36 to page 13, line 36* | 1-7 | |
| | --- | | |
| X | DE-A-2 731 425 (KLEIN, SCHANZLIN & BECKER) *The whole document* | 1,7 | |
| | --- | | |
| A | ELEKTRONIK, vol. 29, no. 10, 1980, pages 67-70, München (DE); M.BRENDLE: "Kombinatorische und sequentielle Logikschaltungen mit PROMs". *Figure 1a; page 67, left-hand column, lines 1-12* | 1 | |
| | ----- | | |

TECHNICAL FIELDS
SEARCHED (Int. Cl. 3)

G 05 B 19

The present search report has been drawn up for all claims

| Place of search | Date of completion of the search | Examiner |
|---|---|---|
| THE HAGUE | 09-02-1983 | KOLBE W.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82